# EUROPÄISCHE PATENTSCHRIFT

(11) **EP 3 008 766 B1**
(45) Veröffentlichungstag und Bekanntmachung des Hinweises auf die Patenterteilung: **05.08.2020**
(21) Anmeldenummer: 14729910.1
(22) Anmeldetag: 13.06.2014
(51) Int. Cl.: H01M 2/26, H01M 2/28, H01M 4/14, H01M 4/73

(54) **AKKUMULATOR UND VERFAHREN ZUR HERSTELLUNG EINES AKKUMULATORS**
BATTERY AND METHOD FOR PRODUCING A BATTERY
ACCUMULATEUR ET PROCÉDÉ PERMETTANT DE FABRIQUER UN ACCUMULATEUR

(30) Priorität: 14.06.2013 DE 102013106206
(43) Veröffentlichungstag der Anmeldung: 20.04.2016
(73) Patentinhaber: Clarios Germany GmbH & Co. KGaA, 30419 Hannover (DE)
(72) Erfinder: REICH, Tatjana, 31535 Neustadt (DE)
(74) Vertreter: Trinks, Ole
(86) Internationale Anmeldenummer: PCT/EP2014/062429
(87) Internationale Veröffentlichungsnummer: WO 2014/198925

(56) Entgegenhaltungen:
- WO-A1-2012/132477
- JP-A- H05 335 020

## Beschreibung

Die Erfindung betrifft einen Akkumulator mit mehreren Elektrodenplatten gemäß dem Oberbegriff des Anspruchs 1. Die Erfindung betrifft außerdem ein Verfahren zur Herstellung eines Akkumulators gemäß dem Anspruch 3.

Die Erfindung betrifft insbesondere das Gebiet von Blei-Säure-Akkumulatoren, wie sie z. B. für Starterbatterien für Kraftfahrzeuge verwendet werden. Ein solcher Akkumulator besteht aus mehreren galvanischen Zellen, die in Reihe geschaltet sind und voneinander durch eine elektrisch isolierende Trennwand getrennt sind. Jede der galvanischen Zellen weist dabei einen Elektrodenplattenstapel in Blockform auf, in dem abwechselnd negative und positive Elektrodenplatten nebeneinander angeordnet sind. Die einzelnen Elektrodenplatten werden miteinander parallel verschaltet. Hierzu werden die Anschlussfahnen gleichpoliger Elektrodenplatten miteinander verbunden, indem z. B. in einem Fahnenangussverfahren ein sog. Batteriezellenverbinder (auch Anschlussverbinder genannt) darauf angegossen wird. Dies ist z. B. in der DE 10 2009 014 116 B3 oder der DE 10 2007 022 246 A1 beschrieben. Der Batteriezellenverbinder wird dabei von oben auf die in gewissen Abständen voneinander angeordneten Anschlussfahnen aufgesetzt und damit verbunden. Eine weitere Ausführung wird in der JP H05 335020 A offenbart.

Wegen der bei solchen Akkumulatoren auftretenden hohen Ströme und der daraus ggf. resultierenden hohen Temperaturen muss der Batteriezellenverbinder relativ massiv ausgeführt werden. Der Batteriezellenverbinder ist in der Regel aus Blei gefertigt, so dass er bei seinem massiven Aufbau relativ schwer ist. Zudem sind Rohstoffe, insbesondere Blei, vergleichsweise teuer.

Der Erfindung liegt daher die Aufgabe zugrunde, einen gattungsgemäßen Akkumulator anzugeben, der leichter ist und preisgünstiger gefertigt werden kann. Ferner soll ein entsprechendes Verfahren zur Herstellung eines Akkumulators angegeben werden, mit dem leichtere und preisgünstigere Akkumulatoren hergestellt werden können.

Diese Aufgabe wird gemäß Anspruch 1 gelöst.

Die Erfindung ermöglicht es daher in verblüffender Weise, den bisher auf die Anschlussfahnen aufgesetzten Batteriezellenverbinder komplett wegzulassen und statt dessen die in einer Reihe nebeneinander angeordneten Anschlussfahnen zu einem Anschlussfahnenblock elektrisch und mechanisch miteinander zu verbinden, und zwar durch eine wenigstens eine zwischen den Anschlussfahnen angeordnete Schweiß- oder Lötstelle über Zwischenmateriallagen. Durch die Bildung des Anschlussfahnenblocks kann weiterhin eine hohe Strombelastbarkeit des Akkumulators gewährleistet werden. Hierfür ist allerdings deutlich weniger Blei erforderlich als bisher, denn die Anschlussfahnen selbst werden mit ihrem Material zur Bildung des Anschlussfahnenblocks herangezogen. Zwischen den Anschlussfahnen vorhandene Lücken werden durch dazwischen eingesetzte Zwischenplättchen ausgefüllt, die im Rahmen des Schweiß- oder Lötvorgangs mit den Anschlussfahnen zu dem Anschlussfahnenblock verbunden werden. Die Zwischenplättchen müssen dabei nicht unbedingt die volle Breite der Lücke zwischen den Anschlussfahnen ausfüllen, sondern können auch etwas schmaler sein. In diesem Fall können die Anschlussfahnen z. B. im Rahmen eines Schweißvorgangs durch eine auf die jeweils außen liegenden Anschlussfahnen aufgesetzte Schweißzange zunächst mechanisch etwas zusammengedrückt werden und dabei aufeinander zu verformt werden. Die Verformbarkeit der Anschlussfahnen erlaubt die Kompensation gewisser Zwischenabstände.

Der Elektrodenplattenstapel in Blockform kann im Prinzip jede beliebige Blockform aufweisen, z. B. eine prismatische Form oder eine Quaderform. Als Rahmen wird jede Art von Rahmen bei Elektrodenplatten verstanden, sowohl ein umlaufender Rahmen, der aus einem oberen, einem unteren sowie einem linken und einem rechten Rahmenabschnitt besteht, als auch ein nicht umlaufender Rahmen, z. B. ein Rahmen der nur einen oberen und einen unteren Rahmenabschnitt aufweist.

Mit der Erfindung kann der Herstellungsprozess und damit die Kosten für einen Akkumulator nicht nur durch die beschriebene Einsparung des Bleis, das durch den weggefallenen Batteriezellenverbinder entfällt, optimiert werden, sondern außerdem durch eine Rationalisierung des Fertigungsprozesses. Das beschriebene Verbinden der nebeneinander in einer Reihe angeordneten Anschlussfahnen zu einem Anschlussfahnenblock kann nämlich wesentlich einfacher und prozesssicherer durchgeführt werden als das Angießen der Batteriezellenverbinder auf die Oberkanten der Anschlussfahnen. Zudem kann durch die beschriebene Bildung des Anschlussfahnenblocks der Akkumulator robuster und insbesondere vibrationsunanfälliger gestaltet werden.

Eine Anschlussfahne hat in vielen Fällen die gleiche Dicke wie der Rahmen einer Elektrodenplatte. Das in dem Rahmen angeordnete Gitter hat in vielen Fällen auch die gleiche Dicke wie der Rahmen, kann aber auch eine geringere Dicke aufweisen. Allerdings sind auch andere Dickenverhältnisse bei Elektrodenplatten möglich.

Gemäß der Erfindung sind die Anschlussfahnen über Zwischenmateriallagen, die zwischen zwei benachbarten Anschlussfahnen angeordnet sind, miteinander stoffschlüssig verbunden. Dies erlaubt eine einfache und schnelle Herstellung des Anschlussfahnenblocks durch miteinander Verschweißen oder Verlöten der Anschlussfahnen. Hierdurch können die Herstellkosten des Akkumulators weiter reduziert werden. Für die Zwischenmateriallagen können z. B. die bereits erwähnten Zwischenplättchen eingesetzt werden.

Gemäß einer vorteilhaften Weiterbildung der Erfindung ist auf dem dem Rahmen abgewandten Ende einer Anschlussfahne kein Anschlussverbinder, d. h. kein Batteriezellenverbinder, der zur Verbindung des Elektrodenplattenstapels mit einem benachbarten Elektrodenplattenstapel einer anderen Zelle des Akkumulators dient, und kein Polschaft eines äußeren Anschlusspols des Akkumulators aufgesetzt. Hierdurch kann die Bleieinsparung maximiert werden und damit der Akkumulator hinsichtlich Kosten und Gewicht weiter optimiert werden.

Gemäß der Erfindung ist ein Anschlussverbinder, der zur Verbindung des Elektrodenplattenstapels mit einem benachbarten Elektrodenplattenstapel einer anderen Zelle des Akkumulators dient, oder ein Polschaft eines äußeren Anschlusspols des Akkumulators mit dem Anschlussfahnenblock stoffschlüssig verbunden. Vorteilhaft ist, im Gegensatz zum Stand der Technik, somit ein Anschlussverbinder oder ein Polschaft mit dem Anschlussfahnenblock verbunden und nicht mit den äußeren Enden der Anschlussfahnen. Hierdurch können kleiner und leichter ausgebildete Anschlussverbinder bzw. Polschäfte eingesetzt werden, als dies bei Akkumulatoren beim Stand der Technik erforderlich ist. So kann z. B. ein Anschlussverbinder einfach seitlich sozusagen in Verlängerung des Anschlussfahnenblocks an diesem stoffschlüssig befestigt werden, z. B. durch Verlöten oder Verschweißen. In ähnlicher Weise kann ein Polschaft mit dem Anschlussfahnenblock verbunden werden, wie nachfolgend auch noch anhand von Ausführungsbeispielen beschrieben wird.

Die eingangs genannte Aufgabe wird gemäß Anspruch 3 ferner gelöst durch ein Verfahren zur Herstellung eines Akkumulators nach einem der vorhergehenden Ansprüche.

Hierdurch kann ein Akkumulator hergestellt werden, der die zuvor erläuterten Vorteile aufweist, insbesondere geringes Gewicht und günstigere Herstellungskosten.

Gemäß der Erfindung beinhaltet das Verfahren ein stoffschlüssiges Verbinden des Anschlussfahnenblocks mit wenigstens einem Anschlussverbinder, der zur Verbindung des Elektrodenplattenstapels mit einem benachbarten Elektrodenplattenstapel einer anderen Zelle des Akkumulators dient, oder wenigstens einem Polschaft eines äußeren Anschlusspols des Akkumulators.

Gemäß einer vorteilhaften Weiterbildung der Erfindung werden die Elektrodenplatten jeweils mit dem Rahmen, dem innerhalb des Rahmens für das Gitter vorgesehenen Bereich und der Anschlussfahne in einem Gießprozess hergestellt. Die Herstellung der Elektrodenplatten in einem Gießprozess erlaubt eine rationelle kostengünstige Fertigung der Elektrodenplatten in großer Stückzahl. Besonders vorteilhaft ist ein kontinuierlicher Gießprozess, durch den ein bandförmiger Rohling kontinuierlich hergestellt wird.

Im Rahmen des Gießprozesses kann das in dem Rahmen zu erzeugende Gitter entweder direkt erzeugt werden, d. h. durch die verwendete Gießform, oder es kann zunächst ein geschlossener Materialbereich hergestellt werden, der dann durch einen Streckmetallprozess in die gewünschte Gitterform gewandelt wird, wie nachfolgend noch erläutert. Anschließend kann das Gitter mit der aktiven Masse befüllt werden.

Gemäß einer vorteilhaften Weiterbildung der Erfindung umfasst der Gießprozess folgendes: Herstellen eines profilierten bandförmigen Rohlings mittels eines Gießverfahrens, wobei nur mittels des Gießverfahrens der bandförmige Rohling in wenigstens einem der Bereich, die schließlich den Rahmen und/oder die Anschlussfahne bilden sollen, einseitig oder beidseitig mit einer größeren Dicke ausgebildet ist als in Bereichen, die schließlich das Gitter bilden sollen. Dies hat den Vorteil, dass auf einfache und keine weiteren Kosten verursachende Weise die Anschlussfahnen gleich mit der vorteilhaften erhöhten Dicke zumindest in den Bereichen hergestellt werden können, wo sie zu dem Anschlussfahnenblock verbunden werden sollen. Hierdurch ergibt sich eine besondere Synergie zwischen dem erfindungsgemäßen Aspekt der Verbindung der Anschlussfahnen zu dem Anschlussfahnenblock und dem beschriebenen Gießprozess, da der Gießprozess selbst schon eine besonders kostengünstige rationelle Fertigung der Elektrodenplatten erlaubt und ohne Mehrkosten auch gleich die Grundlage für ein besonders effizientes Verbinden der Anschlussfahnen zu dem Anschlussfahnenblock beinhaltet.

Gemäß einer vorteilhaften Weiterbildung der Erfindung wird das Gitter in einem auf das zuvor genannte Gießverfahren folgenden Streckmetallprozess erzeugt. Hierdurch kann die Fertigung der Elektrodenplatten weiter rationalisiert werden.

Die Erfindung wird nachfolgend anhand von Ausführungsbeispielen unter Verwendung von Zeichnungen näher erläutert.

Es zeigen:
- Figur 1: die Herstellung eines bandförmigen Rohlings und
- Figur 2: eine Elektrodenplatte und
- Figur 3: einen Bleiakkumulator und
- Figur 4: einen blockförmigen Elektrodenplattenstapel in isometrischer Ansicht und
- Figur 5: den oberen Bereich einer Elektrodenplatte in Seitenansicht und
- Figur 6: nebeneinander angeordnete Elektrodenplatten vor einer Bildung des Anschlussfahnenblocks und
- Figur 7: die Elektrodenplatten gemäß Figur 6 nach der Bildung des Anschlussfahnenblocks und
- Figuren 8 - 11: das Verbinden eines Anschlussverbinders mit einem Anschlussfahnenblock und
- Figuren 12 - 15: das Verbinden eines Polschafts mit dem Anschlussfahnenblock und
- Figur 16: nebeneinander angeordnete Elektrodenplatten vor einer Bildung des Anschlussfahnenblocks und
- Figur 17: die Elektrodenplatten gemäß Figur 16 nach der Bildung des Anschlussfahnenblocks.

In den Figuren werden gleiche Bezugszeichen für einander entsprechende Elemente verwendet.

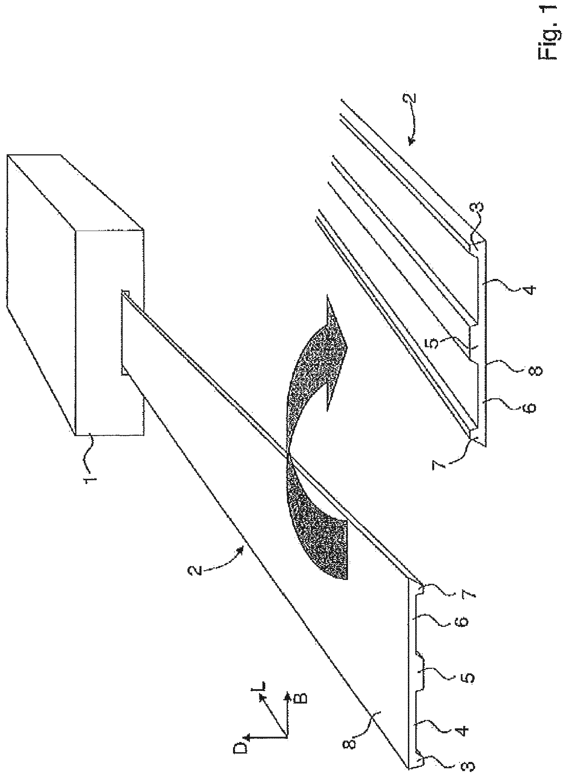

Die Figur 1 zeigt eine Gießanlage 1, die einen bandförmigen Rohling 2 für Elektrodenplatten von Bleiakkumulatoren mittels eines kontinuierlichen Gießverfahrens herstellt. Der Gießanlage 1 wird eingangsseitig Blei zugeführt (nicht dargestellt). Das Blei wird durch die Gießanlage 1 zum Schmelzen gebracht und über eine kontinuierliche Gießform, die profiliert ist, ausgangsseitig als bandförmiger Rohling 2 in der in Figur 1 dargestellten Strangform ausgegeben. Der bandförmige Rohling 2 kann dann wie nachfolgend beschrieben weiterverarbeitet werden.

Die Besonderheit der Gießanlage 1 gemäß Figur 1 besteht darin, dass der bandförmige Rohling 2 mit einem einseitigen Profil hergestellt wird, so dass der Rohling 2 über die Breite B gesehen unterschiedliche Dicken D aufweist. Der bandförmige Rohling 2 kann auch mit einem beidseitigen Profil hergestellt werden, so dass der Rohling 2 über die Breite B gesehen auf beiden Seiten unterschiedliche Dicken D aufweist. Erkennbar ist in der Figur 1 der aus der Gießanlage 1 austretende Rohling 2 mit einer im Wesentlichen ebenen, glatten Oberseite 8 und einer profilierten Unterseite. Der Rohling 2 weist Bereiche 3, 5, 7 mit größerer Dicke D auf als dazwischen liegende Bereiche 4, 6. Die Bereiche 3, 5, 7 mit größerer Dicke D stehen an der Unterseite gegenüber den Bereichen 4, 6 hervor. Die Figur 1 zeigt rechts einen Abschnitt des bandförmigen Rohlings 2, der um 180° um seine Längsachse gedreht ist, um die profilierte Unterseite erkennbar zu machen. Dies verdeutlicht die in Längsrichtung L verlaufende einseitige Profilstruktur des bandförmigen Rohlings 2.

Je nach Ausführungsform kann auch nur der mittlere Bereich 5 die größere Dicke D aufweisen.

Die Gießmaschine 1 ist dabei vollständig ohne Extrusionseinheit ausgebildet, d. h. sie führt ein reines Gießverfahren aus, ohne Extrusionsschritt.

Wie nachfolgend noch beschrieben wird, werden die Bereiche 4, 6 mit geringerer Dicke durch einen Streckmetallprozess in die gitterförmigen Bereiche umgewandelt, aus den Bereichen 3, 5, 7 mit größerer Dicke werden das obere und das untere Rahmenelement sowie teilweise Kontaktfahnen der Elektrodenplatten hergestellt.

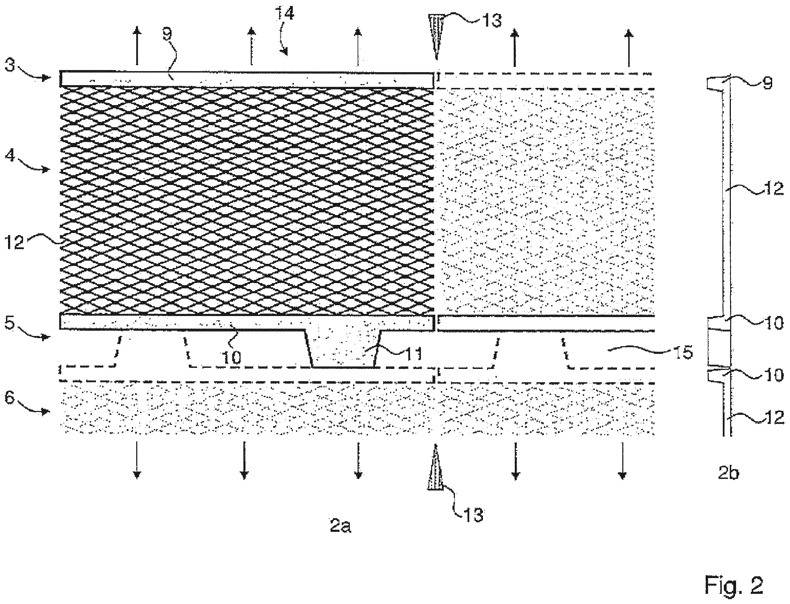

Die Figur 2 zeigt in Figur 2a eine Elektrodenplatte 14 in Draufsicht nach Durchführung des Streckmetallprozesses. Die Elektrodenplatte 14 ist zur Verdeutlichung des Zusammenhangs mit dem bandförmigen Rohling 2 mit weiteren Elektrodenplatten, die nur ausschnittsweise mit geringerem Kontrast bzw. gestrichelt wiedergegeben sind, dargestellt.

Wie erkennbar ist, weist die Elektrodenplatte 14 ein oberes Rahmenelement 10 mit einer daran angeformten Kontaktfahne 11, ein unteres Rahmenelement 9 und einen sich zwischen dem oberen und dem unteren Rahmenelement 9, 10 erstreckenden gitterförmigen Bereich 12 auf. Zur Verdeutlichung des Zusammenhangs zum bandförmigen Rohling 2 gemäß Figur 1 sind die entsprechenden Bezugszeichen der Bereiche des Rohlings 2 aus Figur 1 zusätzlich wiedergegeben.

Die in Figur 2a wiedergegebenen jeweils von dem oberen Rahmenelement 10 und dem unteren Rahmenelement 9 fort weisenden Pfeile deuten an, in welcher Richtung die Elektrodenplatten 14 bei dem Streckmetallprozess mit der Streckkraft beaufschlagt werden.

Aus dem nach dem Streckmetallprozess austretenden Elektrodenband wird durch Abschneiden einzelner Elektrodenplatten, wie durch die Dreiecke 13 in Figur 2a dargestellt, einzelne Elektrodenplatten 14 herausgetrennt. Entsprechend werden auch die Kontaktfahnen 11 von dem oberen Rahmenelement 10 der jeweils gegenüberliegenden Elektrodenplatte abgetrennt. Die Zwischenräume 15 zwischen den Kontaktfahnen 11 werden durch Ausstanzen hergestellt.

Die Figur 2 zeigt rechts in Figur 2b eine Seitenansicht der hergestellten Elektrodenplatte 14, aus der die profilierte Struktur erkennbar wird.

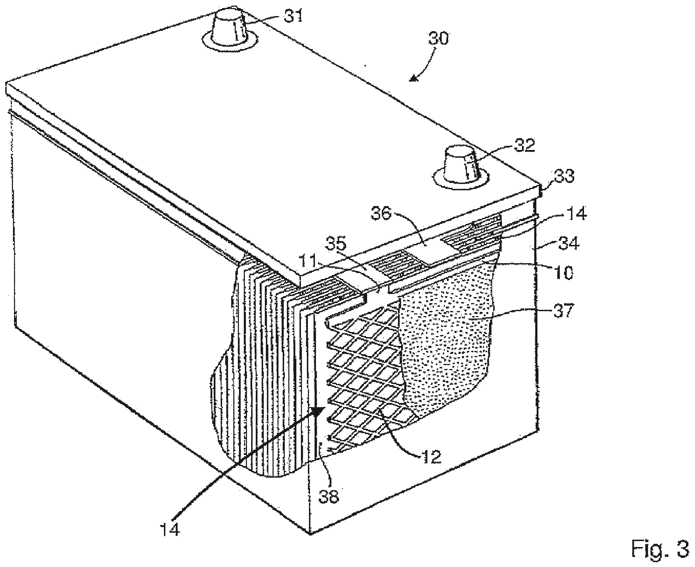

Die Figur 3 zeigt einen Bleiakkumulator 30 mit mehreren Elektrodenplatten 14 der zuvor beschriebenen Art. Der Bleiakkumulator 30 weist ein Deckelteil 33 mit äußeren Anschlusspolen 31, 32 auf. Die äußeren Anschlusspole 31, 32 sind über jeweilige Polschäfte jeweils mit positiven bzw. negativen Elektrodenplatten verbunden. Die Anschlußfahnen 11 negativer Elektrodenplatten 14 sind über einen negativen Elektrodenverbinder 35 miteinander verbunden, die Anschlußfahnen 11 positiver Elektrodenplatten 14 sind über einen positiven Elektrodenverbinder 36 miteinander verbunden. Die Elektrodenverbinder 35, 36 sind bei Akkumulatoren gemäß dem Stand der Technik durch die eingangs beschriebenen Batteriezellenverbinder gebildet. Bei erfindungsgemäßen Akkumulatoren sind an dieser Stelle jeweils Anschlussfahnenblöcke gebildet.

Der Bleiakkumulator 30 weist ein Gehäuseunterteil 34 auf, in dem die Elektrodenplatten 14 angeordnet sind. Die Elektrodenplatten 14 sind mit einer pastösen aktiven Masse 37 versehen. Zusätzlich sind die Elektrodenplatten 14 einschließlich der pastösen aktiven Masse 37 jeweils mit einem Separatormaterial 38 umhüllt.

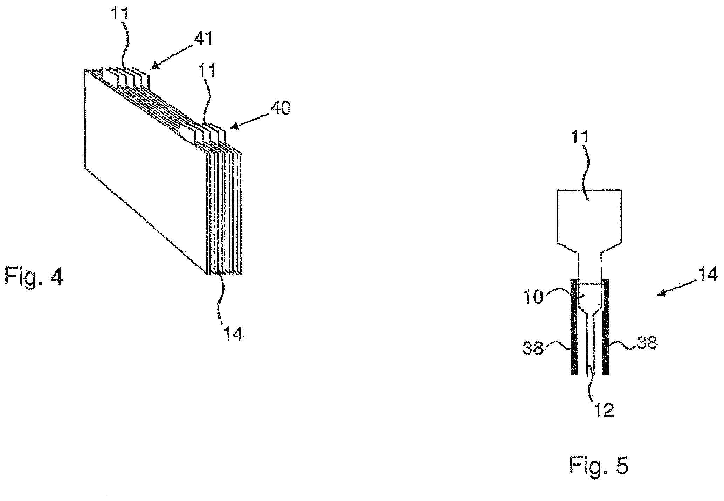

Die Figur 4 zeigt mehrere Elektrodenplatten 14, die mit wechselnder Polarität nebeneinander angeordnet sind und einen Elektrodenplattenstapel in Blockform bilden. Erkennbar ist, dass hierbei die Anschlussfahnen 11 gleichpoliger Elektroden in einer Reihe nebeneinander angeordnet sind, so dass sich zwei Reihen 40, 41 von Anschlussfahnen bilden.

Die Figur 5 zeigt, nicht erfindungsgemäß, beispielhaft den oberen Bereich einer Elektrodenplatte 14 in seitlicher Ansicht. Erkennbar ist das obere Rahmenteil 10 mit darunter beginnendem Gitter 12. Oberhalb des Rahmenteils 10 befindet sich die Anschlussfahne 11, die im Beispiel gemäß Figur 5 mit einer größeren Dicke ausgebildet ist als der Rahmen bzw. das Rahmenteil 10. Die Figur 5 zeigt beispielhaft im oberen Bereich der Anschlussfahne 11 eine symmetrisch zum Rahmen 10 ausgebildete Verdickung der Anschlussfahne. Die Verdickung kann auch unsymmetrisch, insbesondere einseitig vorgesehen sein, was insbesondere bei der Herstellung der Elektrodenplatten in einem Gießprozess vorteilhaft ist. In diesem Fall ist der obere verdickte Bereich der Anschlussfahne 11 sich seitlich nach links oder rechts versetzt vorzustellen, so dass sich an einer Seite eine bündige Anordnung zum Rahmen 9, 10 ergibt. Dies hat auf das nachfolgend beschriebene Prinzip zum Verbinden der Anschlussfahnen keinen Einfluss.

Die Verdickung der Anschlussfahne 11 ist in diesem Fall so stark ausgeprägt, dass dieser Bereich den Abstand zu einer benachbarten gleichpoligen Anschlussfahne überbrückt.

Links und rechts vom oberen Rahmenteil 10 und dem Gitter 12 sind Separatoren 38 zu erkennen.

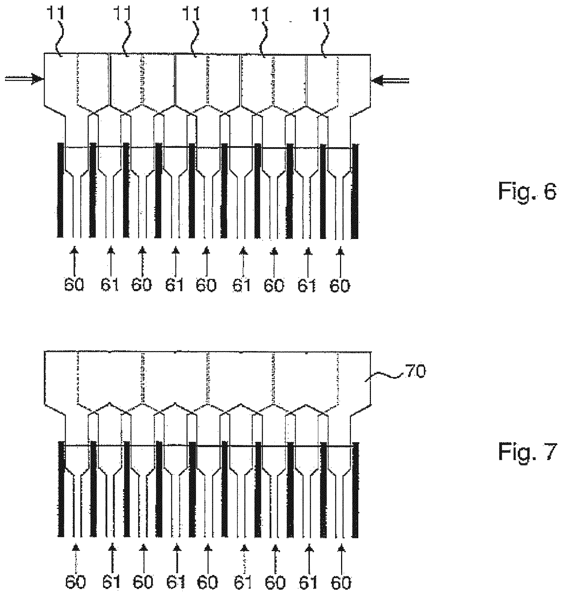

Die Figur 6 zeigt, nicht erfindungsgemäß, eine seitliche Ansicht auf einen Elektrodenplattenstapel, wie er aus Figur 4 hervorgeht, wobei die Elektrodenplatten jeweils gemäß Figur 5 ausgebildet sind. Erkennbar ist, dass die verdickten Bereiche der Anschlussfahnen 11 gleichpoliger Elektrodenplatten praktisch keine Zwischenräume zwischeneinander haben und somit direkt aneinander anschließen. Dementsprechend sind die verdickten Bereiche der Anschlussfahnen der anderspoligen Elektrodenplatten, die weiter hintenliegend sind, an sich nicht voll erkennbar, so dass diese in der Figur 6 mit punktierten Linien wiedergegeben sind.

Die Anschlussfahnen 11, die nebeneinander angeordnet sind, werden nun durch Verschweißen oder Verlöten stoffschlüssig miteinander verbunden. Dies kann z. B. in der Form durchgeführt werden, dass entsprechend den in Figur 6 dargestellten Pfeilen die jeweils äußeren Anschlussfahnen durch auf sie ausgeübte Kräfte aufeinander zu zusammengepresst werden, z. B. mittels einer Schweißzange. Hierdurch werden alle Anschlussfahnen 11 direkt aneinandergepresst, so dass sich auch elektrisch leitende Verbindungen ergeben. Nun ist bei der Schweißzange nur noch der Schweißstrom einzuschalten, und nach kurzer Zeit bildet sich der in Figur 7 (nicht erfindungsgemäß) erkennbare Anschlussfahnenblock 70, zu dem die einzelnen Anschlussfahnen 11 nun verbunden sind.

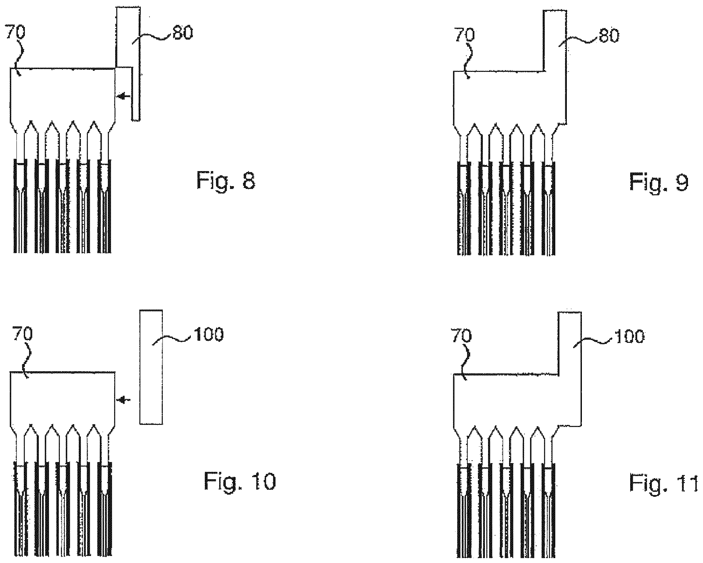

Nachfolgend werden noch beispielhaft Möglichkeiten zum Ankoppeln von Anschlussverbindern (Batteriezellenverbindern) und Polschäften für äußere Anschlusspole des Akkumulators beschrieben. Hierbei wird von der in Figur 7 dargestellten Anordnung mit dem Anschlussfahnenblock 70 ausgegangen, wobei darauf hinzuweisen ist, dass zur Verdeutlichung in den Figuren 5 bis 7 die Elektrodenplatten 14 und insbesondere die verdickten Bereiche der Anschlussfahnen 11 mit übertrieben großer Dicke dargestellt sind. Anhand der Figuren 8 bis 15 wird die gleiche Anordnung wie in Figur 7 dargestellt, jedoch mit realistischeren Proportionen.

Gemäß Figur 8 wird ein in Folge des nun vorhandenen Anschlussfahnenblocks 70 neu zu designender Anschlussverbinder 80 mit dem Anschlussfahnenblock 70 verbunden, in dem der Anschlussverbinder 80 in Richtung des in Figur 8 dargestellten Pfeils an den Anschlussfahnenblock 70 herangeführt wird und anschließend z. B. in gleicher Weise wie für Figur 6 beschrieben, mit dem Anschlussfahnenblock 70 verlötet oder verschweißt wird. Es ergibt sich dann der in Figur 9 dargestellte erweiterte Anschlussfahnenblock 70, an den der Anschlussverbinder 80 stoffschlüssig befestigt ist.

Wie erkennbar ist, weist der Anschlussverbinder 80 gemäß Figur 8 einen abgewinkelten Bereich mit geringerer Materialdicke auf. In diesem abgewinkelten Bereich wird der Anschlussverbinder 80 an den Anschlussfahnenblock 70 angeschlossen. Gemäß den Figuren 10 und 11 kann auch ein einfacher blockförmiger Anschlussverbinder 100 in gleicher Weise an den Anschlussfahnenblock 70 angekoppelt werden. Es ergibt sich dann der in Figur 11 dargestellte, um den Anschlussverbinder 100 verlängerte Anschlussfahnenblock 70.

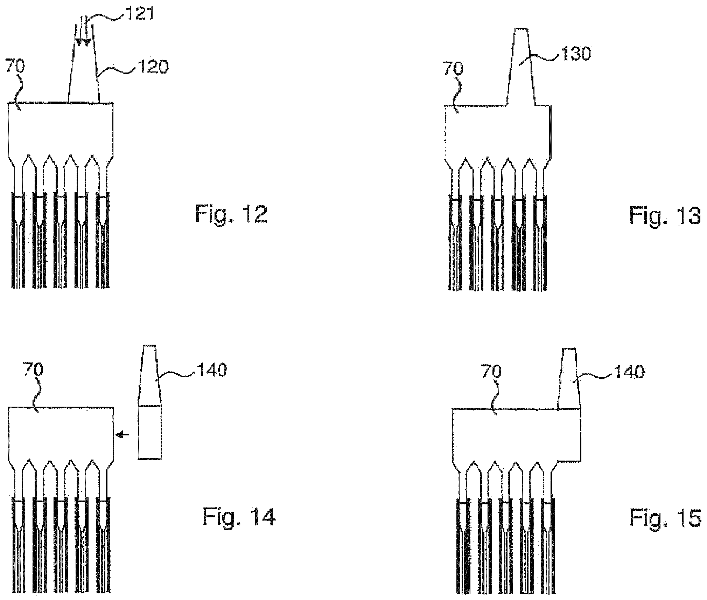

Die Figuren 12 bis 15 zeigen Möglichkeiten zum Verbinden eines Polschafts mit dem Anschlussfahnenblock 70. Ein solcher Polschaft dient zur Herstellung des elektrischen Kontakts mit einem äußeren Anschlusspol 31, 32 des Akkumulators 30. Der Anschlusspol 31, 32 wird dabei auf den Polschaft aufgesetzt und damit durch Verschweißen oder Verlöten verbunden.

In einer Ausführungsform gemäß Figur 12 wird auf den Anschlussfahnenblock 70 eine Lötform 120 aufgesetzt. Die Lötform 120 ist z. B. trichterförmig ausgebildet, um einen konischen Polschaft zu erzeugen. In die Lötform 120 wird nun verflüssigtes Blei 121 eingeführt. Auf diese Weise wird der zu erzeugende Polschaft sozusagen "hochgelötet", d. h. es wird so viel verflüssigtes Blei 121 eingefüllt, bis die gewünschte Höhe des Polschafts in der Lötform 120 erreicht ist. Die Figur 13 zeigt das Ergebnis des Hochlötens des Polschafts, nämlich einen auf dem Anschlussfahnenblock 70 aufgebauten Polschaft 130. Ein solches Verfahren hat den Vorteil, dass der Polschaft 130 auf dem Anschlussfahnenblock einen sehr robusten Halt findet und insbesondere gegenüber Lösungen aus dem Stand der Technik mehr Stabilität und bessere Stromableitungswerte bietet.

Die Figur 14 zeigt eine Möglichkeit, einen vorgefertigten Polschaft 140 seitlich an den Anschlussfahnenblock 70 anzulöten oder anzuschweißen, wie durch den Pfeil in Figur 14 dargestellt ist. Es ergibt sich dann der in Figur 15 dargestellte Aufbau mit einem an den Anschlussfahnenblock 70 stoffschlüssig angekoppelten Polschaft 140.

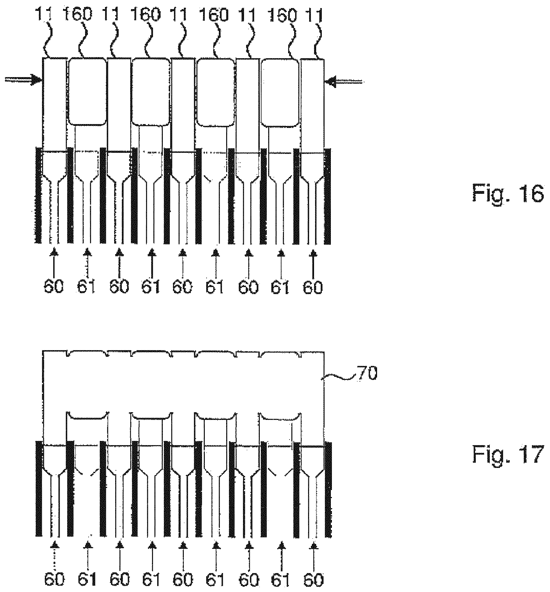

Anhand der Figuren 16 und 17 ist eine erfindungsgemäße Bildung des Anschlussfahnenblocks 70 dargestellt. Es wird gemäß Figur 16 wiederum von einer Anordnung ausgegangen, die der Figur 6 entspricht, jedoch mit dem Unterschied, dass Elektrodenplatten vorgesehen sind, bei denen die Anschlussfahnen 11 nicht verdickt sind, sondern z. B. die gleiche Dicke aufweisen wie der Rahmen 9, 10. Dementsprechend ergeben sich Lücken zwischen benachbarten Anschlussfahnen. Diese Lücken werden durch Zwischenmateriallagen 160, z. B. in Form von dazwischen eingesetzten Zwischenplättchen, die aus Blei bestehen können, überbrückt. Die Zwischenmateriallagen 160 können z. B. zwischen den Anschlussfahnen 11 zunächst eingeklemmt werden. Sodann erfolgt der bereits anhand der Figur 6 erläuterte Vorgang des Verschweißens oder Verlötens der Anschlussfahnen 11 zu dem Anschlussfahnenblock 70, wobei hier zugleich die Zwischenmateriallagen 160 mit verlötet bzw. mit verschweißt werden und damit auch zum Bestandteil des Anschlussfahnenblocks 70 werden, wie in der Figur 17 erkennbar ist.

## Patentansprüche

1. Akkumulator (30) mit mehreren Elektrodenplatten (14), die nebeneinander angeordnet sind und wenigstens einen Elektrodenplattenstapel in Blockform bilden, wobei die Elektrodenplatten (14) jeweils einen Rahmen (9, 10) mit einem darin angeordnetem Gitter (12) aufweisen und wobei zumindest das Gitter (12) mit einer aktiven Masse (37) befüllt ist, und wobei jede Elektrodenplatte (14) wenigstens eine über den Rahmen (9, 10) hinaus stehende Anschlussfahne (11) aufweist, wobei die Anschlussfahnen (11) gleichpoliger Elektrodenplatten (14) in einer Reihe (40, 41) nebeneinander angeordnet sind, wobei die in einer Reihe (40, 41) nebeneinander angeordneten Anschlussfahnen (11) durch wenigstens eine zwischen den Anschlussfahnen (11) angeordnete Schweiß- oder Lötstelle stoffschlüssig zu einem Anschlussfahnenblock (70) elektrisch und mechanisch miteinander verbunden sind,
**dadurch gekennzeichnet, dass**
ein Anschlussverbinder (80, 100), der zur Verbindung des Elektrodenplattensatzes mit einem benachbarten Elektrodenplattensatz einer anderen Zelle des Akkumulators (30) dient, oder ein Polschaft (130, 140) eines äußeren Anschlusspols (31, 32) des Akkumulators (30) mit dem Anschlussfahnenblock (70) stoffschlüssig verbunden ist,
wobei die Anschlussfahnen (11) über Zwischenmateriallagen (160), die zwischen zwei benachbarten Anschlussfahnen (11) angeordnet sind, miteinander stoffschlüssig verbunden sind.

2. Akkumulator nach Anspruch 1,
**dadurch gekennzeichnet, dass**
auf dem dem Rahmen (9, 10) abgewandten Ende einer Anschlussfahne (11) kein Anschlussverbinder, der zur Verbindung des Elektrodenplattensatzes mit einem benachbarten Elektrodenplattensatz einer anderen Zelle des Akkumulators (30) dient, und kein Polschaft eines äußeren Anschlusspols (31, 32) des Akkumulators (30) aufgesetzt ist.

3. Verfahren zur Herstellung eines Akkumulators (30) nach Anspruch 1 oder 2, mit folgenden Merkmalen:
a) Herstellen wenigstens eines Elektrodenplattenstapels aus mehreren Elektrodenplatten (14), indem diese nebeneinander angeordnet werden und eine Blockform bilden, wobei Anschlussfahnen (11) gleichpoliger Elektrodenplatten (14) in einer Reihe (40, 41) nebeneinander angeordnet werden,
b) Verbinden der in einer Reihe nebeneinander angeordneten Anschlussfahnen (11) über Zwischenmateriallagen (160), die zwischen zwei benachbarten Anschlussfahnen (11) angeordnet sind, stoffschlüssig zu einem Anschlussfahnenblock (70), indem wenigstens eine zwischen den Anschlussfahnen (11) angeordnete Schweiß- oder Lötstelle erzeugt wird,
**gekennzeichnet durch**
stoffschlüssiges Verbinden des Anschlussfahnenblocks (70) mit wenigstens einem Anschlussverbinder (80, 100), der zur Verbindung des Elektrodenplattenstapels mit einem benachbarten Elektrodenplattenstapel einer anderen Zelle des Akkumulators (30) dient, oder wenigstens einem Polschaft (130, 1409 eines äußeren Anschlusspols (31, 32) des Akkumulators (30).

4. Verfahren nach Anspruch 3,
**dadurch gekennzeichnet, dass**
die Elektrodenplatten (14) jeweils mit dem Rahmen (9, 10), dem darin für das Gitter (12) vorgesehenen Bereich (4, 6) und der Anschlussfahne (11) in einem Gießprozess hergestellt werden.

5. Verfahren nach Anspruch 4,
**dadurch gekennzeichnet, dass**
der Gießprozess Folgendes umfasst: Herstellen eines profilierten bandförmigen Rohlings (2) mittels eines Gießverfahrens, wobei nur mittels des Gießverfahrens der bandförmige Rohling (2) in wenigstens einem der Bereiche (3, 5, 7), die schließlich den Rahmen und/oder die Anschlussfahne bilden sollen, einseitig oder beidseitig mit einer größeren Dicke (D) ausgebildet wird als in Bereichen (4, 6), die schließlich das Gitter (12) bilden sollen.

6. Verfahren nach Anspruch 5,
**dadurch gekennzeichnet, dass**
das Gitter (12) in einem auf das Gießverfahren folgenden Streckmetallprozess erzeugt wird.

7. Verfahren nach Anspruch 5 oder 6,
**dadurch gekennzeichnet, dass**
das Gießverfahren ein kontinuierlicher Gießprozess ist, durch den der bandförmige Rohling (2) kontinuierlich hergestellt wird.

## Claims

1. Battery (30) with a plurality of electrode plates (14), which are arranged next to one another and form at least one electrode plate stack in block form, wherein the electrode plates (14) each have a frame (9, 10) with a grid (12) arranged therein and wherein at least the grid (12) is filled with an active mass (37), and wherein each electrode plate (14) has at least one terminal lug (11) protruding beyond the frame (9, 10), wherein the terminal lugs (11) of electrode plates (14) of the same polarity are arranged next to one another in a row (40, 41), wherein the terminal lugs (11) arranged next to one another in a row (40, 41) are electrically and mechanically connected to one another in a material-bonded manner by at least one weld point or solder point arranged between the terminal lugs (11) to form a terminal lug block (70),
**characterized in that**
a terminal connector (80, 100) serving for connecting the set of electrode plates to an adjacent set of electrode plates of another cell of the battery (30) or a pole shaft (130, 140) of an external terminal pole (31, 32) of the battery (30) is connected in a material-bonded manner to the terminal lug block (70),
wherein the terminal lugs (11) are connected to one another in a material-bonded manner by way of intermediate material layers (160), which are arranged between two adjacent terminal lugs (11).

2. Battery according to Claim 1,
**characterized in that**
no terminal connector serving for connecting the set of electrode plates to an adjacent set of electrode plates of another cell of the battery (30) and no pole shaft of an external terminal pole (31, 32) of the battery (30) is fitted on the end of a terminal lug (11) remote from the frame (9, 10).

3. Method for producing a battery (30) according to Claim 1 or 2, with the following features:
a) producing at least one electrode plate stack from a plurality of electrode plates (14) by arranging them next to one another and forming a block form, wherein terminal lugs (11) of electrode plates (14) of the same polarity are arranged next to one another in a row (40, 41),
b) connecting the terminal lugs (11) arranged next to one another in a row in a material-bonded manner by way of intermediate material layers (160), which are arranged between two adjacent terminal lugs (11), to form a terminal lug block (70) by at least one weld point or solder point arranged between the terminal lugs (11) being produced,
**characterized by**
connecting the terminal lug block (70) in a material-bonded manner by at least one terminal connector (80, 100) serving for connecting the electrode plate stack to an adjacent electrode plate stack of another cell of the battery (30) or at least one pole shaft (130, 1409 of an external terminal pole (31, 32) of the battery (30).

4. Method according to Claim 3,
**characterized in that**
the electrode plates (14) are in each case produced with the frame (9, 10), the area (4, 6) provided therein for the grid (12) and the terminal lug (11) in a casting process.

5. Method according to Claim 4,
**characterized in that**
the casting process comprises the following: producing a profiled linear blank (2) by means of a casting process, wherein, only by means of the casting process, the linear blank (2) is formed with a greater thickness (D) on one or both sides in at least one of the areas (3, 5, 7) ultimately intended to form the frame and/or the terminal lug than in areas (4, 6) ultimately intended to form the grid (12) .

6. Method according to Claim 5,
**characterized in that**
the grid (12) is produced in an expanded metal process following the casting process.

7. Method according to Claim 5 or 6,
**characterized in that**
the casting process is a continuous casting process by which the linear blank (2) is continuously produced.

## Revendications

1. Accumulateur (30) comprenant plusieurs plaques d'électrode (14), qui sont disposées les unes à côté des autres et forment au moins un empilement de plaques d'électrode en forme de bloc, les plaques d'électrode (14) possédant respectivement un cadre (9, 10) dans lequel est disposée une grille (12) et au moins la grille (12) étant remplie d'une masse active (37), et chaque plaque d'électrode (14) possédant au moins une barrette de raccordement (11) qui fait saillie au-dessus du cadre (9, 10), les barrettes de raccordement (11) de plaques d'électrode (14) du même pôle étant disposées les unes à côté des autres en une rangée (40, 41), les barrettes de raccordement (11) disposées les unes à côté des autres en une rangée (40, 41) étant reliées électriquement et mécaniquement entre elles par fusion de matières en un bloc de barrettes de raccordement (70) par le biais d'au moins un point de soudure ou de brasure disposé entre les barrettes de raccordement (11),
**caractérisé en ce que**
un connecteur de raccordement (80, 100), qui sert à la liaison du jeu de plaques d'électrode avec un jeu de plaques d'électrode voisin d'une autre cellule de l'accumulateur (30), ou un noyau polaire (130, 140) d'un pôle de raccordement externe (31, 32) de l'accumulateur (30) est relié au bloc de barrettes de raccordement (70) par fusion de matières,
les barrettes de raccordement (11) étant reliées entre elles par fusion de matière par le biais de couches de matériau intermédiaires (160) qui sont disposées entre deux barrettes de raccordement (11) voisines.

2. Accumulateur selon la revendication 1, **caractérisé en ce qu'**aucun connecteur de raccordement, qui sert à la liaison du jeu de plaques d'électrode avec un jeu de plaques d'électrode voisin d'une autre cellule de l'accumulateur (30), et aucun noyau polaire d'un pôle de raccordement externe (31, 32) de l'accumulateur (30) n'est monté sur l'extrémité d'une barrette de raccordement (11) à l'opposé du cadre (9, 10).

3. Procédé de fabrication d'un accumulateur (30) selon la revendication 1 ou 2, ayant les caractéristiques suivantes :
a) fabrication d'au moins un empilement de plaques d'électrode constitué de plusieurs plaques d'électrode (14) en disposant celles-ci les unes à côté des autres et en leur faisant former un bloc, les barrettes de raccordement (11) de plaques d'électrode (14) du même pôle étant disposées les unes à côté des autres en une rangée (40, 41),
b) liaison des barrettes de raccordement (11) disposées les unes à côté des autres en une rangée par fusion de matières en un bloc de barrettes de raccordement (70) par le biais de couches de matériau intermédiaires (160) qui sont disposées entre les barrettes de raccordement (11), en générant au moins un point de soudure ou de brasure disposé entre les barrettes de raccordement (11), **caractérisé par**
liaison par fusion de matières du bloc de barrettes de raccordement (70) avec au moins un connecteur de raccordement (80, 100), qui sert à la liaison du jeu de plaques d'électrode avec un jeu de plaques d'électrode voisin d'une autre cellule de l'accumulateur (30), ou au moins un noyau polaire (130, 1409 d'un pôle de raccordement externe (31, 32) de l'accumulateur (30).

4. Procédé selon la revendication 3, **caractérisé en ce que** les plaques d'électrode (14), respectivement avec le cadre (9, 10), la zone (4, 6) prévue dans celui-ci pour la grille (12) et la barrette de raccordement (11), sont fabriquées dans un processus de coulée.

5. Procédé selon la revendication 4, **caractérisé en ce que** le processus de coulée comprend les opérations suivantes : fabrication d'une ébauche (2) profilée en forme de feuillard au moyen d'un procédé de coulée, l'ébauche (2) en forme de feuillard étant configurée uniquement au moyen du procédé de coulée en au moins l'une des zones (3, 5, 7), qui doivent finalement former le cadre et/ou la barrette de raccordement, d'un côté ou des deux côtés avec une épaisseur (D) supérieure à celle des zones (4, 6) qui doivent finalement former la grille (12) .

6. Procédé selon la revendication 5, **caractérisé en ce que** la grille (12) est produite dans un processus de métal étiré qui suit le procédé de coulée.

7. Procédé selon la revendication 5 ou 6, **caractérisé en ce que** le procédé de coulée est un processus de coulée continue par le biais duquel l'ébauche (2) en forme de feuillard est fabriquée en continu.
